Europäisches Patentamt

European Patent Office

Office européen des brevets

(19)

(11) Publication number: **0 010 976**
**B1**

(12) **EUROPEAN PATENT SPECIFICATION**

(45) Date of publication of patent specification: **04.08.82**

(51) Int. Cl.³: **B 21 B 15/00, B 21 B 47/00**

(21) Application number: **79302424.1**

(22) Date of filing: **02.11.79**

(54) Heat shield arrangements.

(30) Priority: **07.11.78 GB 4350678**

(43) Date of publication of application:
**14.05.80 Bulletin 80/10**

(45) Publication of the grant of the patent:
**04.08.82 Bulletin 82/31**

(84) Designated Contracting States:
**BE DE FR GB IT NL**

(56) References cited:
**EP - A - 0 005 340**
**FR - A - 1 416 688**
**GB - A - 1 040 420**
**US - A - 1 676 176**

(73) Proprietor: **ENCOMECH ENGINEERING SERVICES LIMITED**
**729 London Road**
**Hounslow, TW3 1SE (GB)**

(72) Inventor: **Laws, William Robert**
**19 Tudor Avenue**
**Worcester Park, Surrey (GB)**
Inventor: **Reed, Geoffrey Ronald**
**8 Beechdene**
**Tadworth, Surrey (GB)**

(74) Representative: **Gura, Henry Alan et al,**
**MEWBURN ELLIS & CO. 2/3 Cursitor Street**
**London EC4A 1BQ (GB)**

Courier Press, Leamington Spa, England.

# Heat shield arrangements

This invention relates to heat shield arrangements and is concerned particularly, but not exclusively, with heat shields for use in metal processing plant, such as hot strip mills.

It has previously been proposed to conserve the heat of hot steel strip in its passage through a hot rolling mill by providing a shield of heat-insulating panels adjacent the strip (GB—A—1 040 420), especially at the delay table of the mill. Although it has also been proposed to arrange such panels so that they are displaceable towards and away from the strip in order to control their shielding effect, it is desirable to arrange that such panels are capable of being positioned as close to the strip as possible in normal operation, so that they exercise a more uniform effect over the width of the strip.

The reduction of the gap between the strip and the panels, is limited, however, by the need to allow for introduction of the strip past the panels and then to allow for deflections and transient displacements of the strip transverse to its travel direction. The panels, if they are to be both efficient and economical will have a relatively thin-walled construction and they are therefore susceptible to damage if struck by the metal strip as it moves along its travel path.

This damage is particularly likely to occur to the upper panels, because the roll table itself offers some protection for the lower panels. European Patent Application 0 005 340 describes an arrangement in which, to protect the upper panels, sensors are provided below the surface of the upper panels but above the usual position of the strip material: these sensors will then detect any lifting of the material and can actuate raising means to lift the upper panels clear of the material. However, there may be no resultant advantage in this if the panels are raised too frequently, because there is the disadvantage that the sheet material will itself be adversely affected by the uncontrolled cooling that occurs when the upper panels are raised. There will be many instances when the rolling process has been interrupted unnecessarily with consequent increase of costs and delay, because the lifting of the strip material would not have caused damage to the panels.

According to the present invention, there is provided a heat shield arrangement for a heated length of strip material (e.g. a slab or sheet) comprising heat-insulating panels arranged adjacent to a travel path for the material and including a series of upper panels extending over said path, displacement means comprising power actuation means for raising said upper panels away from said path being actuable by sensing means responsive to lifting or upward deformation of the strip, said power actuation means influencing the operation of the sensing means to determine the magnitude of the upwards force from the strip at which the sensing means responds, whereby the panels are maintained in operative lowered positions under normal operating conditions until said determined force is exceeded.

Preferably, protective bumper or fender elements project below the upper panels. These elements may be fixed relative to the upper panels but preferably they are carried by mounting means that permit some displacement relative to the panels. The sensing means may similarly be fixed relative to the upper panels but preferably comprise elements also mounted in a relatively displaceable manner, advantageously on said protective element mounting means.

The invention makes it possible to provide a relatively restricted vertical spacing between the upper and lower panels without disturbing that spacing except in case of need. Problems can arise, however, because although during rolling the main extent of a slab or strip will usually be relatively flat, its ends can be turned-up (i.e. curved upwards or downwards) to a certain degree because of the forces applied to each end portion as it passes unsupported through a set of rolls, and the effective height of the material may be increased thereby to many times the material thickness. This effect is particularly marked when a strip is rolled in a semi-continuous mill having reversing roughing roll stands through which the initial slab is passed forwards and backwards repeatedly, to reduce its thickness, but in a continuous mill the leading end of the strip will also be deformed in a similar way.

A heat shield arrangement according to this may have an increased height passage at an entry region for the introduction of a turned-up strip material, said entry passage decreasing in height to lead into a more limited vertical spacing of said intermediate region. This measure can be employed with particular advantage in combination with the displacement means operable in dependence on the force of the lifted material as aforesaid, since the entry region may offer sufficient resistance to reduce the turn-up of the leading end of the material and so help to minimise the vertical spacing between the upper and lower insulating panel in the intermediate part of the heat shield arrangement.

It is possible for the entry region, especially if relatively short, to comprise a relatively robust bar or frame structure with little heat-insulating effect if any, but it will be preferred, particularly if it is required to provide a relatively large maximum height entry, that at least a part of the entry region is composed of upper and lower heat-insulating panels the vertical distance between which panels is progressively reduced along the length of the material path towards said intermediate region.

In an arrangement in which the main or intermediate path of the channel path has a relatively uniform insulating effect due to the closeness of the upper and lower panels, the benefit of this may be partly lost where the panels must be more widely spaced apart, for example at an increased height entry region. In such cases, to obtain the desired degree of uniformity of heat insulation it may be preferred to provide panels at the sides of the strip travel path, with heating elements disposed on or within at least some of said side panels. In this way it is possible to counteract the greater heat loss from the edges of the material due to the additional surface area, and especially at the ends of the heat shield arrangement where in addition to any increased spacing of the upper and lower panels, the panels may themselves not be close to the heated material temperature.

In any event, the panels are preferably so arranged that they provide an enclosure that substantially completely surrounds the material path. Alternatively, it may be sufficient to arrange that there is substantially no straight-line path for heat radiation from the strip past the panels transverse to the travel path of the strip.

As a further measure to avoid damage to the insulating panels, protective bumper or fender elements may project from the inner surfaces of said panels towards the material path below and at the sides of the panels and are preferably connected directly to a rigid supporting structure.

The invention will be described in more detail by way of example with reference to the accompanying drawings, wherein:—

Figure 1 is an isometric view of a heat shield arrangement having upper panel displacement means according to the invention,

Figure 2 is a fluid control diagram for the panel displacement means of the arrangement in Figure 1,

Figure 3 is a schematic side view of a heat shield arrangement according to the invention between successive roll stands in a continuous rolling mill,

Figure 4 shows to a larger scale a detail of the entry end of the heat shield arrangement of Figure 3,

Figure 5 is a schematic side view of a heat shield arrangement according to the invention between successive roll stands in a semi-continuous rolling mill,

Figure 6 is a sectional view on the line X—X in Figure 5,

Figure 7 is a schematic illustration to explain the manner in which different heat loss rates occur over the width of a hot strip, and

Figure 8 is a diagrammatic sectional view of a heat shield arrangement having side insulating panels with heating means according to the invention.

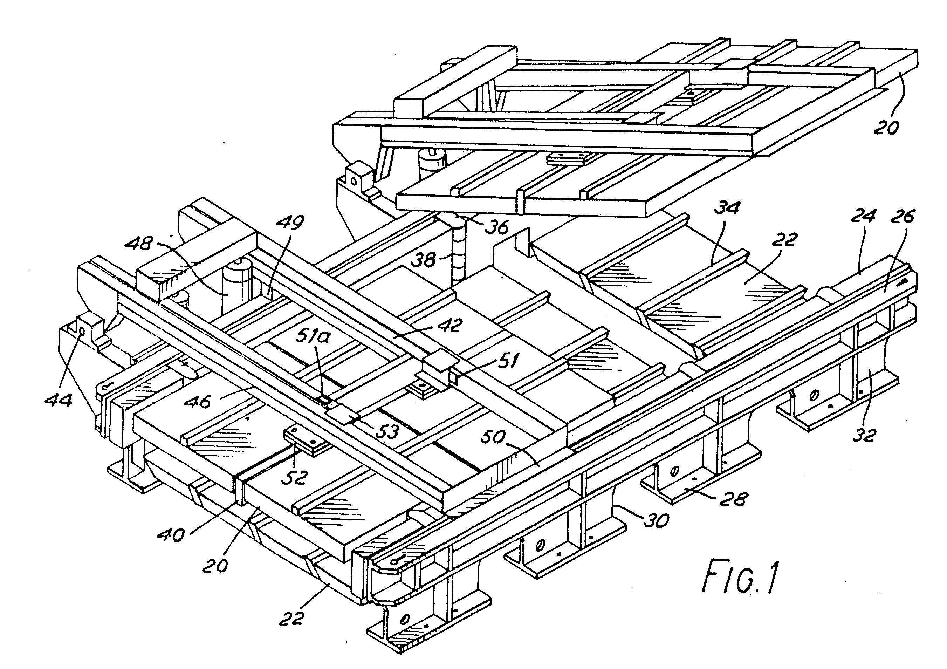

Figure 1 illustrates a preferred embodiment of a heat shield arrangement in the form of a self-contained module that can be fitted into an existing rolling mill installation. The module comprises top, bottom and side panels 20, 22, 24 respectively supported on a rigid frame 26 having mounting flanges 28. Elongated slots 30 are formed in the side members 32 of the frame to allow clearance for the mill roller-table rollers (not shown). The bottom panels are mounted on cross-bracing sub-frames (not shown) which increase the stiffness of the frame 26.

Also mounted on the cross-bracing sub-frames are longitudinal bumper or fender bars 34 projecting above the bottom panels 22 to protect them from damage by the hot strip. The bars 34 also help to guide the leading edge of the strip from roller to roller, and when the arrangement is to form part of the original equipment of a rolling mill installation the guidance offered by the bumper bars 34 allows the roller table to be designed with the rollers to be spaced more widely apart than has hitherto been the practice so that there is a corresponding increase of the heat-insulating panel area.

The side panels 24 are protected by bumper or fender elements in the form of upwardly extending bolsters 36 fixed rigidly to the main frame 26. The spacing between the bolsters will be determined by the anticipated measure of sideways movement of the hot strip but generally two bolsters 36 per side panel will be sufficient. In the design of the bolsters a compromise must be reached between mechanical strength and resistance to thermal stresses, as it will be appreciated that there will be large thermal gradients within them. To minimise the generation of thermal stresses a series of slots or grooves 38 can be formed in the exposed or hot face of each bolster 36 to allow the hot face to expand and contract relatively freely. Thermal stress relieving grooves (not shown) may also be used in the hot faces of the bottom bumper bars 34 and the further bumper bars 40 that are provided for the top panels 20.

Although supported through the rigid frame 26, the top panels 20 are mounted in a displaceable manner so that they can be lifted away from the roller table. As already mentioned this may be needed, for example, to prevent damage to the top panel if the hot strip lifts from the roller table but it is arranged that minor disturbances will not cause the top panels 20 to lift and they are swung away from the roller table only if excessive upward forces occur on the bumper bars 40. Thus, it has been found that the front end of a hot steel strip can often bounce from roller to roller as it is feeding through the roller table, and it will then strike the bumper bars 40 as it bounces, but not with any very great force. It is therefore an advantage to ensure that the heat shield arrangement remains undisturbed by these relatively minor disturbances, although protective action is needed if excessively large upward forces occur.

In the preferred arrangement shown, the top panel bumper bars 40 are mounted separately from the top panels 20 themselves, on a carrier frame 42 mounted on pivot blocks on the main frame 26, the blocks defining a longitudinal pivot axis 44 at the side of the roller table. Pairs of top panels 20 are mounted each on a separate frame 46 that is also attached to the main frame 26 and that surrounds the associated carrier frame 42. The panel mounting frames 46 are pivoted on the same longitudinal axis 44 as the carrier frames 42 and are capable of relative rotation thereto to a limited extent.

In the closed or operative position of the top panels, as shown by the foremost pair in Figure 1, each bumper bar carrier frame 42 is held down with a positive holding force by displacement means in the form of fluid pressure rams 48 and bears on adjustable stops 49 mounted on that side of the frame 26 nearer the pivot axis 44. In the closed position the panel mounting frames 46 are supported separately from the carrier frames 42, each panel mounting frame having a side flange 50 that can then rest upon the fixed frame 26.

The hold-down force exerted by the rams 48 on the carrier frames 42 will be chosen in dependence upon the type of material being rolled, its temperature, width and thickness. The arrangement is such that if the strip strikes the bars 40 with a force less than the selected level their carrier frame 42 remains in position, but if a higher force is experienced the carrier frame 42 will lift against the pre-loading force and activate a limit switch 51 to switch the pressure connections to the rams 48, so that the rams are extended and instead of holding down the bumper bars 40 they lift the carrier frame 42. As the carrier frame rises it engages with brackets 52 the associated panel mounting frame 46 and the mounting frame, with the panels mounted on it, is then lifted together with the carrier frame 42. To ensure positive entrainment of the panel mounting frame 46 by the carrier frame 42 in the downward closing movement, particularly if they are arranged to move to near to or past a vertical position, brackets 53 secured to each carrier frame 42 overlap a portion of its associated panel mounting frame 46.

In the fully lowered position of each carrier frame, a specific clearance is provided between the brackets 52 and the associated panel mounting frame 46 by virtue of the independent support of the mounting frame on its side flange 50. In this way, while the carrier frame 42 remains in its lower position, the impact loads on its bumper bars 40 are not transmitted to the panels 20 or their mounting frame 46 due to the independent support arrangements of the carrier and support frames. The bumper bars 40 therefore act as part of an independent cushioning system until a preset lifting force is experienced, so protecting the panels 20 until the disturbing force is so great that it displaces the bumper bars 40 sufficiently to raise both carrier and mounting frames, and with them the panels.

As an alternative or an addition to the limit switch 51 already referred to for triggering movement of the bumper bar carrier frame 42, an inertia switch 51a may be attached to the frame to switch the rams 48 when required. Since the inertia switch 51a will respond in dependence upon the magnitude of the upwards force applied to the bumper bar 40, before the bar has been displaced significantly by the force, this can provide a more rapid response.

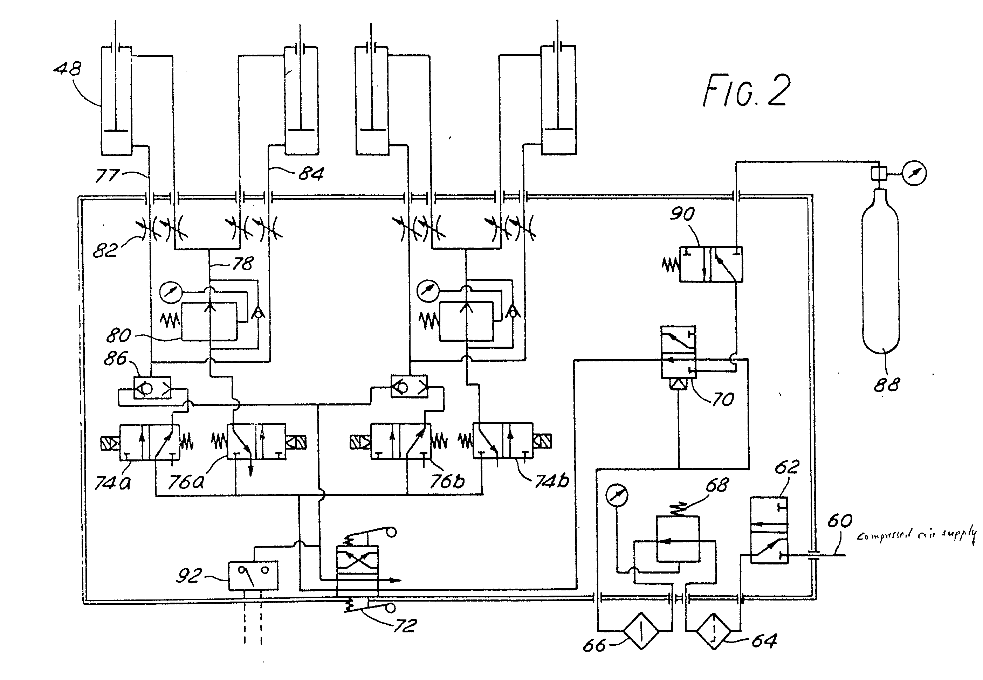

Figure 2 shows an example of the control circuit that may be employed to operate the rams 48 in the manner already described. A pneumatic control circuit is shown but it will be appreciated that a corresponding hydraulic circuit could be employed for hydraulic rams or indeed an electrical drive and control arrangement could be similarly substituted.

In the circuit shown, a compressed air supply 60 is fed through an electrically operated isolation valve 62, a filter 64, a moisture trap 66, a pressure regulator 68 and a pilot-operated diverter valve 70, to a manually controlled valve 72 having alternative open and closed positions, the open position shown placing the circuit in its normal operating state. Pressure air can pass through the open manual valve 72 to a series of solenoid valves 74a, 74b, and 76a, 76b which control the air flows to and from the rams 48. When the solenoid valves are energised the rams are contracted to lower the top panels, but they are illustrated in their de-energised state, so that pressure air is fed directly through lines 77, 84 at full pressure to the underside of the ram pistons to extend the rams 48 from the contracted state shown and raise the panels 20 rapidly while the ram cylinder spaces above the pistons are exhausted through lines 78 and the solenoid valves.

When the solenoid valves are energised and switched to the opposite positions to those shown, if permitted by the state of pressure control valves 80, pressure air flows through the lines 78 to contract the rams. Flow control valves 82 in the lines 78 and the lines 77, 84 to the underside of the ram pistons control the rate of contraction of the rams 48 and therefore limit the speed at which the panels are lowered. They operate only in this direction of flow and therefore do not limit the speed of movement of the rams when the panels are being raised. The pressure control valves 80 can be adjustably set, and by regulating the supply pressure to the upper sides of the ram cylinders can determine the preload that the rams apply to the upper bar support frame. It will be understood from the foregoing description that the limit switch 51 previously referred to controls the operation of the solenoid vales, so that actuation of the limit switch changes the valves over from a normally energised state.

Spring loaded shuttle valves 86 are provided in the supply lines 77, 84 to the undersides of the rams and are shown in their normally biased positions. If required in an emergency, the solenoid valves can be overridden by switching the manual valve 72 from the position shown. The main supply pressure is then applied to the shuttle valves 86 to switch them over and allow the pressure air to flow directly to the undersides of the rams 48 to lift the panels.

In the event of loss of main supply pressure, the pilot-operated valve 70 automatically reverses to isolate the main supply line 60 and to connect to the control circuit a back-up supply such as from a compressed air bottle 88. This back-up supply is fed through a further pilot-operated valve 90 which remains operative only if the back-up supply is pressurised. If the back-up pressure falls the valve 90 closes and with both pilot-operated valves then closed the control circuit is isolated.

The control of the solenoid valves may be by means of electrical circuits from sequence switches mounted on a remote control panel (not shown). Automatic override signals initiated by switches such as 51 and 51a on the panel bumper bars 40 or their mountings 42, or from separate detector means such as a detector (not shown) mounted upstream of the heat shield arrangement that will be operated by bent or buckled stock entering the mill roller table, can cut off the electrical supply to the solenoid valves by means of cut-out switches (not shown) thay may be re-set from the control panel. Additionally, if the manual override valve 72 is switched to raise the rams directly as already described, pressure air is then also fed to a switch 92 which in turn activates said cut-out switches to isolate the electrical circuits and prevent remote control of the rams in this condition.

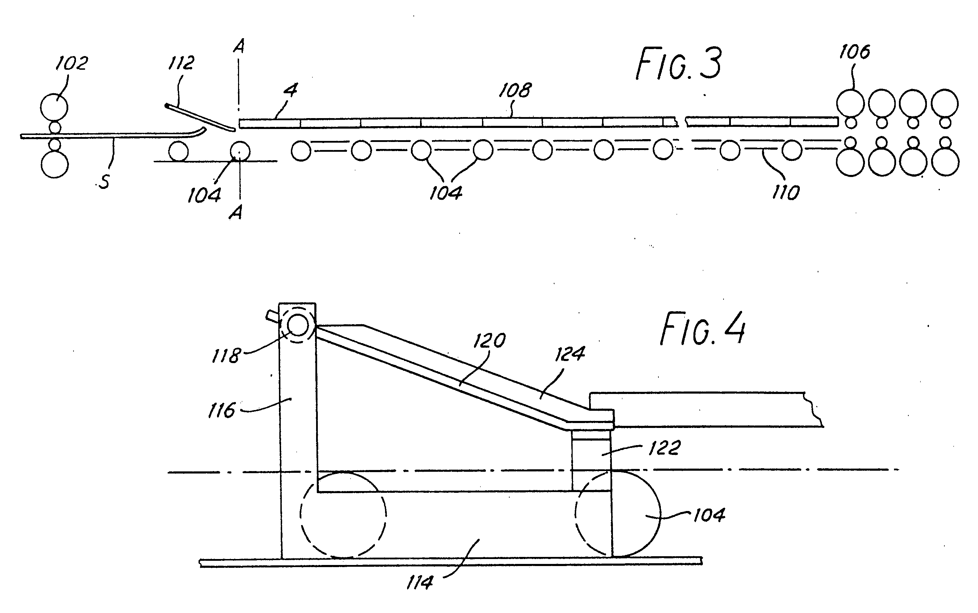

Figure 1 shows the upper and lower panels at a uniform and relatively close vertical spacing, but this may not be possible at the entry region of the heat shield arrangement. Figure 3 shows a section through a continuous rolling mill in which the material being rolled passes continuously through roughing stands 102, along the roller table 104 to the finishing stands 106. In this process it is not uncommon for the nose end of the slab or strip S to acquire a turn-up or set so that it is raised from the roller table to such an extent that it would not be able to enter the small spacing between the series of upper and lower panels 108, 110. To overcome this problem and to ensure that quite large turn-ups can be accommodated, the arrangement has an entry region provided with guide means 112 that form an entry passage of increased height. ·

As Figure 4 shows in more detail, the guide means comprise a robust base frame 114 that is clamped to the side walls of the existing roller table or is fixed rigidly to the mill foundations. Vertical members 116 of the frame support a transverse pivot bar 118 to which the leading end of a nose entry guide member 120 is attached. The guide member can thus pivot with the bar 118 but it normally rests upon adjustable botton stops 122 at its rear end. The guide member takes the form of a reinforced frame or plate structure and includes a central spar 124 that extends under the main bumper bar of the first upper panel of the heat shield arrangement.

In use, the guide member will normally remain in its illustrated position under the combined action of its own weight and the hold-down force that is being applied to the bumper bar. The entering sheet material, if above the height of the bumper bar, will strike the guide member and be urged downwards to below the level of the bumper bar. If the turn-up or deformation of the entering material is such as to be able to force the entry guide member upwards, this will also displace its adjoining bumper bar and, as previously described, if the force is sufficient the panel raising mechanism will be operated. On the other hand, since the entry member can be of a very robust construction it is possible to arrange that it offers considerable resistance to displacement and thereby partially corrects any turn-up of the entry material.

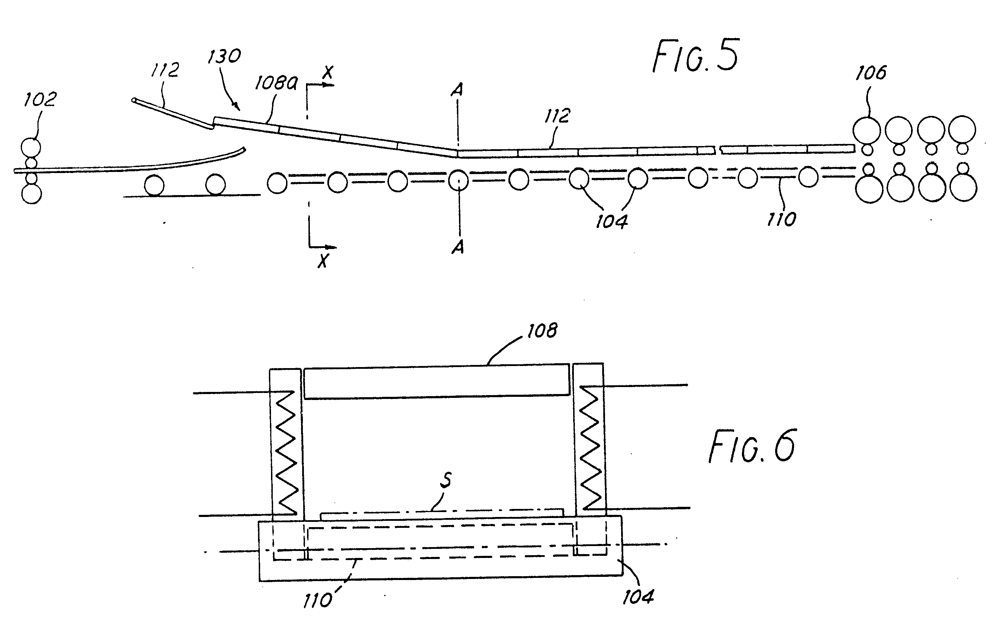

In other types of rolling mill the above-described entry guide means may not be sufficient. For example, in semi-continuous mills the material is reduced from slab-form by consecutive passes backwards and forward through reversing roughing stands. In this process there are considerably greater variations in turn-up or lift of the material than in a continuous rolling process and a much greater entry height must be permitted. In that case, to employ entry guide means with little or no heat-insulating effect, as shown in Figure 3 and 4, may make it difficult or impossible to provide an effective heat shield arrangement and an arrangement such as is illustrated in Figure 5 may be required.

In this arrangement, an increased height entry section 130 continues over part of the extent of the heat-insulating panels themselves, and this may occupy up to some 40% of the length of the roller table 104. The guide means 112 itself is generally similar to that already described with reference to Figure 4, but is of course disposed at a higher level. As before it co-operates with the bumper bar associated with the leading upper panel 108a.

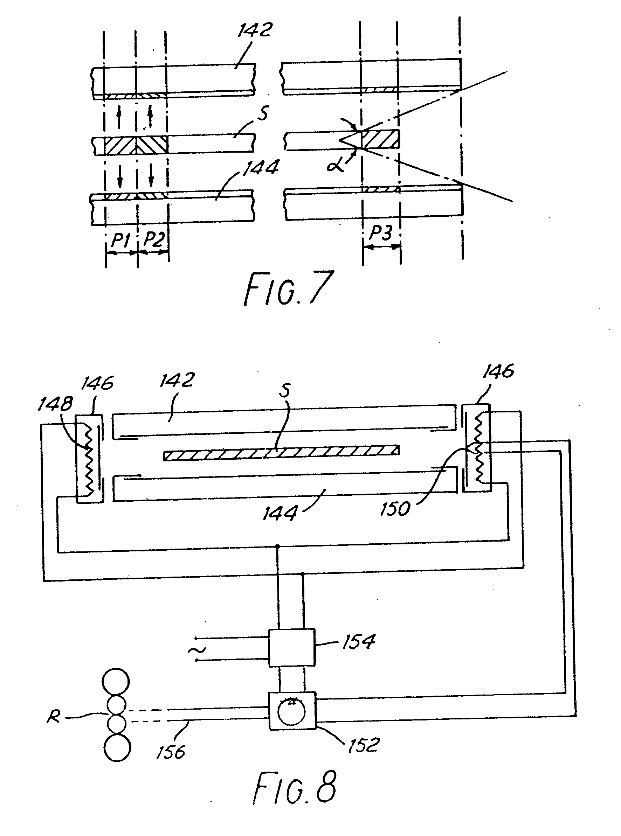

Where it is necessary to have a substantial vertical spacing between the upper and lower insulating panels, a further difficulty may arise, as will now be explained with reference to Figure 7, which shows in schematic form a part of a transverse cross-section of a hot strip S as on a rolling mill delay table between mills, with heat shield panels 142, 144 above and below the strip respectively. In the central part of its width at portions such as P1 and P2 of the strip, most of the heat radiated from the hot strip will effectively go to heat up portions of corresponding width of the heat shield panels. Some fall of temperature will result, to a similar extent for all such portions in the central region of the strip width.

At the edges of the strip, however, conditions are no longer uniform. Because a large proportion of the energy radiated from a marginal portion such as the edge width P3 will fall on parts of the heat shield panels which are beyond the width of the strip, this marginal portion of the strip gives up more heat to the panels so that there will be a greater fall in the temperature of the strip at its lateral margins.

This effect will be increased by heat loss to the sides between the top and bottom panels of the shield, where the energy radiated from the strip over an angle $\alpha$ will be directly lost. The direct radiation loss can reduced by increasing the width of the shield relative to the strip, but then there is a greater energy loss from the hot strip to heat the marginal portions of the heat shield panels that will be particularly marked during start-up.

Figure 8 illustrates one form of hot strip rolling mill arrangement according to the invention in which in addition to upper and lower heat-insulating panels 142, 144 heat-insulating side panels 146 are mounted at the outer edges of the upper and lower panels to form a heat shield surrounding the path of the hot strip S. It will be clear from the preceding explanation with reference to Figure 7 that blocking off direct leakage of radiant energy from the edges of the strip in this manner will be advantageous under steady state conditions, but the side panels will themselves act as a heat sink when cold and the situation may only be improved slightly during start-up conditions.

To overcome this problem, the side panels are provided with heating means 148, which may be either contained within the panels, immediately behind an inner cover plate as illustrated, or be mounted over the inward face of the panels. In general it will be found that electrical heating elements provide the most convenient method of giving the flexibility of operation that is required, but other forms of heating such as radiant tube gas or oil burners can be used.

Although not shown in detail in the drawings, each of the heat-insulating panels may comprise a thin-walled casing containing a core of one or more layers of heat insulating material.

Temperature sensors 150 are located at convenient intervals along the length of the side panels 146 to monitor the inner surface temperature and the sensor signals are utilised by a controller 152 and voltage regulator 154 to provide a stepped power input to the heating elements of side panels for controlling the surface temperature.

In operation the apparatus may be controlled in the following manner. The desired side panel surface temperatures are first selected on the controller 152 and if the sensed values are below these temperatures the controller actuates the voltage regulator 154 so that a controlled power supply is fed to the heating elements 148. Instead of relying on a voltage regulation the control may operate by on/off switching of the heating elements. An interlock arrangement 156 prevents the heating of the side panels being switched on unless the finished stands R of the mill are ready for production. Once steady state conditions are reached and the control system switches off the side panel heaters 148, the panels of course continue to function as part of a passive heat shield arrangement. It will be understood that in particular installations it may be required to also have heating means associated with the upper and/or lower panels and these may then be operated in a similar manner.

It will be clear that the provision of such side heating means can be of particular advantage in the heat shield arrangement shown in Figure 5, where there is a considerable distance between the upper and lower panels in the entry region of the roller table. As indicated by Figure 6, therefore, the heating means as already described with reference to Figure 8 can be employed over the increased height entry region. It will be understood that the use of such side heating means can be employed elsewhere in heat shield arrangements according to the invention, and may even be provided along the complete length of the heat shield arrangement if required.

**Claims**

1. A heat shield arrangement for a heated length of strip material comprising heat-insulating panels arranged adjacent to a travel path for the material and including a series of upper panels (20 or 108 or 142) extending over said path, displacement means (48) comprising power actuation means for raising said upper panels away from said path being actuable by sensing means (51, 51a) responsive to lifting or upward deformation of the strip, characterised in that said power actuation means influence the operation of the sensing means (51; 51a) to determine the magnitude of the upwards force from the strip at which the sensing means responds, whereby the panels are maintained in operative lowered positions under normal operating conditions until said determined force is exceeded.

2. A heat shield arrangement according to claim 1 wherein protective bumper or fender elements (40) project from the planes of the inner surfaces of said panels (20; 108; 142) towards the material path.

3. A heat shield arrangement according to claim 2 wherein said elements (40) projecting downwardly from the upper panels (20; 108; 142) are carried on mounting means (42) that are displaceable relative to the upper panels.

4. A heat shield arrangement according to Claim 3 wherein said mounting means (42) and their associated upper panels (20) are pivotable about a common longitudinal axis (44).

5. A heat shield arrangement according to claim 4 together with claim 3 wherein said upper panel displacement means (48) are arranged to act through said mounting means (42) to apply a hold-down force for retaining the upper panels (20) in their operative positions.

6. A heat shield arrangement according to any one of claims 3 to 5 wherein the upper panels (20) are supported separately from the mounting means (42) when in their normal operative positions and are raised with said mounting means after a predetermined upwards movement of the mounting means against the force of the displacement means (48).

7. A heat shield arrangement according to claim 5 or claim 6 wherein adjustable stop means (49) are provided to determine the hold-down position of said mounting means (42).

8. A heat shield arrangement according to any one of claims 3 to 7 wherein entrainment means (53) are provided to lower the panels together with said mounting means (42) from a raised position.

9. A heat shield arrangement according to any one of claims 3 to 8 wherein the sensing means comprises elements (51, 51a) carried by said mounting means (42).

10. A heat shield arrangement according to any one of the preceding claims wherein the sensing means comprises a limit switch (51) and/or an inertia switch (51a) responsive to upwards displacement under the influence of the sheet material acting against a preloading hold-down force.

11. A heat shield arrangement according to any one of the preceding claims wherein heat-insulating panels (22, 24; 144, 146) are also arranged below and/or at the sides of the path and protective bumper or fender elements (34, 36) are secured to a rigid supporting structure (26) to project inwardly from said bottom and/or side panels.

12. A heat shield arrangement according to any one of claims 2 to 11 wherein slots or grooves (38) are provided on those surfaces of the protective elements (36) facing the material path to assist differential thermal expansion of the elements.

13. A heat shield arrangement according to any one of the preceding claims wherein means (82) are provided to limit the rate of descent of the upper panels (20) from the raised position.

14. A heat shield arrangement according to any one of the preceding claims wherein a main part of the longitudinal extent of the arrangement having a limited height travel path for the strip material (S) is preceded by an increased-height entry region (130) the height of which is progressively reduced towards said main part.

15. A heat shield arrangement according to any one of the preceding claims having heat insulating panels (146) at the sides of the material path with heating elements (148) disposed on or within at least some of said panels.

16. A heat shield arrangement according to claim 15 wherein temperature sensors (150) are provided in or adjacent the side panels (146) having heating elements (148), for the control of the power input to said heating elements.

**Patentansprüche**

1. Hitzeschildanordnung für einen erhitzten Abschnitt eines Bandmaterials, bestehend aus wärmeisolierenden Tafeln, die neben einer Transportbahn des Bandmaterials angeordnet sind und eine Reihe oberer Tafeln (20; 108; 142) aufweisen, die sich über der Transportbahn erstrecken, wobei mit Kraftantrieben versehene Verlagerungseinrichtungen (48) zum Abheben der oberen Tafeln von der Transportbahn durch Fühler (51, 51a) betätigbar sind, die auf eine Aufwärtsbewegung oder eine nach oben gerichtete Verformung des Bandmaterials ansprechen, dadurch gekennzeichnet, daß die Kraftantriebe die Wirkungsweise der Fühler (51, 51a) beeinflussen, um die Stärke der nach oben gerichteten Kraft des Bandmaterials zu bestimmen, auf die die Fühler ansprechen, wodurch die Tafeln unter normalen Betriebsbedingungen in der wirksamen abgesenkten Stellung gehalten werden, bis die bestimmte Kraft überschritten wird.

2. Hitzeschildanordnung nach Anspruch 1, dadurch gekennzeichnet, daß Stoßdämpfer oder Puffer (40) von den Ebenen der Innenflächen der Tafeln (20; 108; 142) zur Bahn des Materials vorstehen.

3. Hitzeschildanordnung nach Anspruch 2, dadurch gekennzeichnet, daß die von den oberen Tafeln (20; 108; 142) nach unten ragenden Puffer (40) von Stützteilen (42) getragen sind, die gegenüber den oberen Tafeln beweglich sind.

4. Hitzeschildanordnung nach Anspruch 3, dadurch gekennzeichnet, daß die Stützteile (42) und die diesen zugeordneten oberen Tafeln (20) um eine gemeinsame Längsachse (44) verschwenkbar sind.

5. Hitzeschildanordnung nach Anspruch 3 und 4, dadurch gekennzeichnet, daß die den oberen Tafeln zugeordneten Verlagerungseinrichtungen (48) über die Stützteile (42) wirksam sind, um eine Niederhaltekraft auszuüben, welche die oberen Tafeln (20) in der wirksamen Stellung hält.

6. Hitzeschildanordnung nach einem der Ansprüche 3 bis 5, dadurch gekennzeichnet, daß die oberen Tafeln unabhängig von den Stützteilen (42) abgestützt sind, wenn sie sich in ihrer normalen Betriebsstellung befinden, und zusammen mit den Stützteilen angehoben werden, nachdem diese entgegen der Kraft der Verlagerungseinrichtung (48) eine bestimmte Aufwärtsbewegung durchgeführt haben.

7. Hitzeschildanordnung nach Anspruch 5 oder 6, dadurch gekennzeichnet, daß einstellbare Anschläge (49) vorgesehen sind, um die Niederhalteposition der Stützteile (42) zu bestimmen.

8. Hitzeschildanordnung nach einem der Ansprüche 3 bis 7, dadurch gekennzeichnet, daß Mitnehmer (53) vorgesehen sind, um die Tafeln zusammen mit den Stützteilen (42) von einer angehobenen Stellung abzusenken.

9. Hitzeschildanordnung nach einem der Ansprüche 3 bis 8, dadurch gekennzeichnet, daß die Fühler aus Elementen (51, 51a) bestehen, die von den Stützteilen (42) getragen werden.

10. Hitzeschildanordnung nach einem der vorhergehenden Ansprüche, dadurch gekennzeichnet, daß die Fühler aus einem Grenzlagenschalter (51) und/oder einem Trägheitsschalter (51a) bestehen, der auf die Aufwärtsbewegung unter der Wirkung des Bahnmaterials anspricht, die einer vorgespannten Niederhaltekraft entgegenwirkt.

11. Hitzeschildanordnung nach eine, der vorhergehenden Ansprüche, dadurch gekennzeichnet, daß auch unter und/oder neben der Bahn des Materials wärmeisolierende Tafeln (22, 24; 144, 146) angeordnet sind und daß Stoßdämpfer oder Polster (34, 36) an einer starren Stützkonstruktion (26) befestigt sind, um von den unteren und/oder seitlichen Platten nach innen zu ragen.

12. Hitzeschildanordnung nach einem der Ansprüche 2 bis 11, dadurch gekennzeichnet, daß in den der Materialbahn zugekehrten Oberflächen der Polster (36) Schlitze oder Nuten (38) angeordnet sind, um der unterschiedlichen Wärmeausdehnung der Polster Rechnung zu tragen.

13. Hitzeschildanordnung nach einem der vorhergehenden Ansprüche, dadurch gekennzeichnet, daß Mittel (82) vorgesehen sind, um die Absenkgeschwindigkeit der oberen Tafeln (20) aus der angehobenen Stellung zu begrenzen.

14. Hitzeschildanordnung nach einem der vorhergehenden Ansprüche, dadurch gekennzeichnet, daß einem Hauptteil der Längenerstreckung der Anordnung, in dem die Bahn des Bandmaterials eine beschränkte Höhe hat, ein Eintrittsbereich (130) von größerer Höhe vorausgeht, dessen Höhe zum Hauptteil hin stetig abnimmt.

15. Hitzeschildanordnung einem der vorhergehenden Ansprüche, dadurch gekennzeichnet, daß an den Seiten der Materialbahn wärmeisolierende Tafeln (146) angeordnet sind, wobei zumindest an oder in einigen der Tafeln Heizelemente (148) angoerdnet sind.

16. Hitzeschildanordnung nach Anspruch 15, dadurch gekennzeichnet, daß an oder in den mit Heizelementen (148) versehenen seitlichen Tafeln (146) Temperaturfühler (150) angeordnet sind, um die Leistungsaufnahme der Heizelemente zu steuern.

**Revendications**

1. Agencement d'écran de chaleur pour tronçon de matériau en bande chauffée comprenant des panneaux isolants thermiques disposés au voisinage d'un parcours du matériau et comportant une série de panneaux supérieurs (20 ou 108 ou 142) s'étendant au dessus dudit parcours, des moyens de déplacement (48) comprenant des moyens d'actionnement pour soulever lesdits panneaux supérieurs en retrait dudit parcours étant susceptibles d'être actionnés par des moyens de détection (51, 51a) sensibles à un soulèvement ou à une déformation vers le haut de la bande, caractérisé en ce que lesdits moyens d'actionnement agissent sur la fonctionnement des moyens de détection (51, 51a) en vue de déterminer l'amplitude de la force dirigée vers le haut provenant de la bande à laquelle les moyens de détection répondent, grâce à quoi les panneaux sont maintenus en position abaissée de fonctionnement dans des conditions opératoires normales jusqu'à ce que ladit force déterminée soit dépassée.

2. Agencement d'écran de chaleur selon la revendication 1, caractérisé en ce que des éléments de butée ou pare-choc de protection (40) s'étendent à partir des plans des faces intérieures desdits panneaux (20, 108, 142) en direction du parcours du matériau.

3. Agencement d'écran de chaleur selon la revendication 2, caractérisé en ce que lesdits éléments (40) s'étendant vers le bas à partir des panneaux supérieurs (20, 108, 142) sont montés sur des moyens de montage (42) déplaçables relativement aux panneaux supérieurs.

4. Agencement d'écran de chaleur selon la revendication 3, caractérisé en ce que lesdits moyens de montage (42) et leurs panneaux supérieurs associés (20) sont montés pivotant autour d'un axe longitudinal commun (44).

5. Agencement d'écran de chaleur selon la revendication 4 associée à la revendication 3, caractérisé en ce que lesdits moyens (48) de déplacement des panneaux supérieurs sont agencés de manière à agir par l'intemédiaire desdits moyens de montage (42) en vue d'appliquer une force de maintien vers le bas afin de retenir les panneaux supérieurs (20) dans leur position active.

6. Agencement d'écran de chaleur selon l'une quelconque des revendications 3 à 5, caractérisé en ce que les panneaux supérieurs (20) sont montés de manière séparée à partir des moyens de montage (42) lorsqu'ils sont dans leur position normale active et sont soulevés avec lesdits moyens de montage après un déplacement vers le haut prédéterminé des moyens de montage à l'encontre de la force des moyens de déplacement (48).

7. Agencement d'écran de chaleur selon la revendication 5 ou 6, caractérisé en ce que des moyens de butée réglables (49) sont prévus pour déterminer la position de maintien abaissée desdits moyens de montage (42).

8. Agencement d'écran de chaleur selon l'une quelconque des revendications 3 à 7, caractérisé en ce que des moyens d'entraînement (53) sont prévus pour abaisser les panneaux en même temps que lesdits moyens de montage (42) à partir d'une position relevée.

9. Agencement d'écran de chaleur selon l'une quelconque des revendications 3 à 8, caractérisé en ce que les moyens de détection comprennent des organes (51, 51a) portés par lesdits moyens de montage (42).

10. Agencement d'écran de chaleur selon l'une quelconque des revendications 1 à 9, caractérisé en ce que les moyens de détection comprennent un interrupteur de fin de course (51) et/ou un interrupteur à inertie (51a) sensibles à un déplacement vers le haut sous l'action du matériau en feuille agissant à l'encontre d'une force de pré-charge de maintien vers le bas.

11. Agencement d'écran de chaleur selon l'une quelconque des revendications 1 à 10, caractérisé en ce que des panneaux isolants thermiques (22, 24; 144, 146) sont également disposés en dessous et/ou sur les côtés du parcours et des éléments de butée ou pare-chocs protecteurs (34, 36) sont fixés sur une structure support rigide (26) de manière à s'étendre vers l'intérieur à partir desdits panneaux de dessous et/ou de côtés.

12. Agencement d'écran de chaleur selon l'une quelconque des revendications 2 à 11, caractérisé en ce que des encoches ou gorges (38) sont ménagées sur celles des surfaces des éléments protecteurs (36) qui font face au parcours du matériau pour faciliter la dilatation thermique différentielle des éléments.

13. Agencement d'écran de chaleur selon l'une quelconque des revendications 1 à 12, caractérisé en ce que des moyens (82) sont prévus pour limiter de degré d'abaissement des panneaux supérieurs (20) à partir de la position relevée.

14. Agencement d'écran de chaleur selon l'une quelconque des revendications 1 à 13, caractérisé en ce qu' une partie principale du développement longitudinal de l'agencement déterminant une zone de passage de hauteur limitée pour le matériau en bande (S) est précédée d'une zone d'entrée de hauteur accrue (130), celle-ci étant progressivement réduite en direction de ladite partie principale.

15. Agencement d'écran de chaleur selon l'une quelconque des revendications 1 à 14, caractérisé en ce qu'il comporte des panneaux isolants thermiques (146) sur les côtés du parcours du matériau avec des éléments chauffants (148) disposés sur au moins certains desdits panneaux, ou à l'intérieur de ceux-ci.

16. Agencement d'écran de chaleur selon la revendication 15, caractérisé en ce que des détecteurs de température (150) sont prévus à l'intérieur ou au voisinage des panneaux latéraux (146) comportant des éléments de chauffage (148), en vue de commander l'alimentation en énergie desdits éléments chauffants.

FIG.1

FIG. 2

compressed air supply

0010976

Fig.3

Fig.4

FIG.5

FIG.6

FIG. 7

FIG. 8